# FASCICULE DE BREVET EUROPEEN

(11) **EP 2 661 869 B1**
(45) Date de publication et mention de la délivrance du brevet: **26.12.2018**
(21) Numéro de dépôt: 11700394.7
(22) Date de dépôt: 05.01.2011
(51) Int. Cl.: H04M 1/725, G06K 7/01

(54) **SYSTÈME POUR ACTIONNER UN TERMINAL PORTABLE**
SYSTEM ZUR BETÄTIGUNG EINES TRAGBAREN ENDGERÄTS
SYSTEM FOR ACTUATING A PORTABLE TERMINAL

(43) Date de publication de la demande: 13.11.2013
(73) Titulaire: CONNECTHINGS, 75010 Paris (FR)
(72) Inventeur: GAZEL ANTHOINE, Laetitia, 75009 Paris (FR)
(74) Mandataire: Lebkiri, Alexandre
(86) Numéro de dépôt international: PCT/EP2011/050113
(87) Numéro de publication internationale: WO 2012/092968

(56) Documents cités:
- EP-A1- 1 557 961
- EP-A1- 1 696 354
- US-A1- 2008 057 876
- US-A1- 2010 099 354
- US-A1- 2011 007 901

## Description

La présente invention concerne un dispositif pour actionner un terminal portable par un utilisateur au moyen d'un ensemble d'étiquettes à identifiant unique.

On connaît dans l'art antérieur des étiquettes à identifiant unique consistant par exemple en des codes à barres à une dimension ou des matrices à damier à deux dimensions. Il existe aussi des étiquettes du même type utilisant la technologie dite « RFID » ou encore « NFC». De telles étiquettes, lorsqu'elles sont capables d'être munies d'un identifiant unique, sont utilisées dans l'art antérieur en liaison avec un terminal portable, notamment un téléphone portable, muni d'un lecteur d'étiquettes, pour en extraire l'identifiant unique les caractérisant sans ambiguïté dans un ensemble d'étiquettes.

Les applications de la technologie des étiquettes à identifiant unique sont importantes, notamment lorsqu'elles sont utilisées conjointement à une base de données, généralement hébergée sur un serveur distant du téléphone ou hébergée dans le téléphone portable si sa puissance de traitement le permet.

Dans ces applications, après lecture sur une étiquette d'un identifiant unique, celui-ci est envoyé à la base de données, assimilée au serveur, ensemble avec un identifiant du terminal ou téléphone, cet identifiant peut être un petit fichier ou « cookie » ; en retour, la base de données détermine une action sur le téléphone portable, comme par exemple l'affichage d'une page web par le navigateur du téléphone ou la mise en veille de la sonnerie, en fonction de l'identifiant unique reçu par la base et de l'identifiant du téléphone, tel que transmis à la base de données. Dans ce contexte il est fait référence aux documents EP 1 557 961 A1, US 2008/057876 A1, US 2010/099354 A1 et EP 1 696 354 A1.

Toutefois, dans l'art antérieur, le nombre de choix offerts à l'utilisateur pour actionner son terminal au moyen des étiquettes, soit pour recevoir des données pertinentes suite à la lecture d'une étiquette avec un téléphone portable, soit pour recevoir des commandes à destination de celui-ci, est directement lié au nombre d'étiquettes disponibles pour ce téléphone en un endroit donné.

Pourtant, la multiplication des étiquettes dans un lieu public comme un musée, est impossible ou peu souhaitable, surtout pour des questions d'encombrement ou d'esthétique.

Pour des étiquettes situées essentiellement à un même endroit, par exemple pour un choix de langue par un utilisateur, il est peu envisageable de multiplier les étiquettes proportionnellement au nombre de langues.

De plus, pour des étiquettes situées dans des endroits différents mais logiquement reliées entre elles, selon un parcours de visite, notamment d'un musée, l'utilisateur qui souhaite utiliser un terminal de visite, apte à lire les étiquettes, est contraint de suivre le parcours des étiquettes dans l'ordre prévu, chaque étiquette pouvant être associée par la base de données d'une application à la position de la suivante, indépendamment de l'identité du visiteur ou du terminal. Il peut en résulter un désagrément pour les visiteurs qui se suivent à la queue-leu-leu sans pouvoir organiser leur visite à leur guise, dans un ordre quelconque ou personnel.

Il n'est en effet pas connu d'actualiser et de personnaliser les informations délivrées à un visiteur en fonction de l'historique ou séquence dans le temps des déplacements du visiteur représenté par l'historique des étiquettes distinctes lues par un même terminal au cours du temps ou du nombre de fois qu'un même terminal a lu une même étiquette, pour indiquer notamment un choix entre différentes langues, comme dans un menu.

L'art antérieur connaît donc uniquement pour des systèmes comprenant un terminal portable, une base de données et un ensemble d'étiquettes à identifiant unique pouvant être lues par le terminal pour lui délivrer de l'information de la base de données, la délivrance au terminal, d'information non actualisée ou non personnalisée en fonction de l'historique des connexions du terminal à la base de données, du terminal, ou séquence temporelle ou séquence, des étiquettes déjà lues par le terminal.

L'invention est définie par les revendications indépendantes 1, 8 et 9. Des variantes particulières de l'invention sont définies dans les revendications dépendantes 2 à 7.

Il est à noter que les exemples et modes de réalisation dans la description ne font pas partie de l'invention mais représentent des éléments de l'état de la technique qui sont utiles à la compréhension de l'invention. En effet, l'invention est définie uniquement par les revendications.

Au sens de la présente invention une séquence d'identifiants uniques est un ensemble d'au moins deux identifiants uniques ayant été lus à des instants différents par ledit terminal ; une base de données est un système de gestion de données, pouvant être hébergé sur un calculateur pouvant être un ordinateur serveur distant dudit terminal, ou un ordinateur local audit terminal, ou encore pouvant être réparti entre un serveur distant et un ordinateur local audit terminal, ladite base de données, pouvant comprendre des moyens de mémorisation de la séquence d'identifiants uniques reçus et de datation dans le temps des identifiants lus par ledit terminal identifié, notamment dans une table associée audit terminal, et pouvant comprendre des moyens de calculs permettant d'exploiter les informations sur la séquence et sur l'identité du terminal pour déterminer comme résultat, une action à faire effectuer au terminal ; un lieu de visite est tout lieu ouvert au public ou à des visiteurs, comme un monument, un musée, un centre commercial ou une ville.

### Description de l'invention :

L'invention peut être réalisée dans deux premiers modes distingués par le nombre d'étiquettes lues par le terminal, notamment un premier mode de réalisation dans lequel le terminal lit une seule étiquette et un second mode dans lequel il en lit au moins deux.
L'invention est décrite pour ces deux modes dans le cadre d'un musée dans lequel un utilisateur d'un terminal portable souhaite effectuer un parcours jalonné de bornes, munies chacune d'au moins une étiquette à identifiant unique, en atteignant une seule fois chaque borne.
L'invention comprend alors le terminal portable, un ensemble d'étiquettes sur lesquelles le terminal peut être utilisé pour lire un identifiant unique, définissant sans ambiguïté l'étiquette lue, parmi l'ensemble des étiquettes à lire et une base de données hébergée sur un serveur ou sur le terminal si celui est doté de moyens de calcul suffisants. Une liaison est établie entre la base de données et le terminal, qui permet à la base de données d'identifier le terminal, soit parce qu'un identifiant du terminal ou numéro du terminal, est transmis à la base en même temps que l'identifiant unique de chaque étiquette, soit parce que la base de données est capable, de façon équivalente, sur le fondement des informations précédemment reçues dans le temps via la liaison, de déduire sans ambiguïté qu'il s'agit du même terminal qui a effectué la lecture de l'étiquette. Cette situation est résumée par le fait que la base de données est munie de moyens d'identifier le terminal ayant lu l'identifiant unique.
Par ailleurs la base de données peut associer à chaque identifiant unique d'étiquette associé à un numéro de terminal, un temps absolu de lecture du couple identifiant et numéro, par exemple au moyen d'une horloge à laquelle la base de données a accès pour connaître ce temps absolu. Cette caractéristique est d'ailleurs supposée commune à tous les modes de l'invention. Cette situation est résumée par le fait que la base de données est munie de moyens pour mémoriser la séquence temporelle des identifiants uniques lus par un même terminal. Cette mémoire peut être limitée à un nombre donné d'identifiants ou à une profondeur dans le passé limitée, en fonction du type d'utilisation de ladite séquence temporelle.

Au début de la visite, aucune information sur l'historique des lectures des bornes par le terminal n'est archivée dans la base de données. La séquence temporelle des identifiants du terminal est donc vide. La base peut être programmée pour accepter tout numéro de terminal ou une liste finie de terminaux identifiés par leurs numéros, à des fins de sécurité ou pour éviter des fraudes, si l'accès au terminal est payant.

La première borne est alors une borne de choix de langue par l'utilisateur de ladite borne. Elle est représentative d'un service accessible à tout moment par l'utilisateur.
A cette fin, l'utilisateur lit l'étiquette de la borne choix de langue grâce au terminal et la base de données reçoit un ensemble de données correspondant à l'identifiant unique de choix de langue, le numéro du terminal et lui attribue une heure par son horloge ou éventuellement par celle du terminal si le terminal transmet aussi le temps absolu de lecture par la liaison, à la base de données.
La base de données archive alors dans une table dédiée au terminal identifié, l'identifiant et l'heure ou le temps absolu de la lecture. Elle actionne alors le terminal, par exemple par affichage sur son écran d'une liste de langue, au moyen d'un navigateur internet ou d'une application dédiée.
L'utilisateur peut alors choisir entre une liste de langues d'affichage en répétant la lecture de l'étiquette de choix de langue, jusqu'à obtenir la langue souhaitée. A cette fin, la base de données choisit un contenu à afficher qui est fonction de l'historique des lectures de l'étiquette de choix de langue ou de leur séquence temporelle, en comptant la répétition de la lecture de cette étiquette dans la table du terminal et en affichant la langue dont le numéro est égal à la somme du nombre des lectures de cette même étiquette, modulo le nombre total de langues.
A tout instant de sa visite, le visiteur peut revenir à cette borne pour changer de langue et afficher la langue suivante dans la liste des langues disponibles sur son terminal. Des bornes de service permettant un choix dans un menu quelconque peuvent être mises à disposition de l'utilisateur par calcul de la répétition ou de la somme des occurrences de la lecture d'une même étiquette de service dans la table d'un même terminal. Pour un tel menu, la séquence temporelle est une répétition qui concerne une seule étiquette.
Pour la suite de sa visite dans le musée, l'utilisateur du terminal peut choisir grâce à l'invention de parcourir l'ensemble des bornes dans l'ordre qu'il souhaite, par simple lecture au moyen du terminal des bornes qu'il atteint en séquence. A cette fin, la séquence temporelle des identifiants uniques des étiquettes des bornes qu'il atteint est archivée dans la base de données dans la table dédiée au terminal et une liste des bornes restant à atteindre dans son parcours est affichée, en sélectionnant seulement les bornes dont les identifiants ne sont pas présents dans la table du terminal et en les envoyant au terminal pour affichage. Dans ce cas, la séquence temporelle est un enchaînement qui concerne au moins deux étiquettes distinctes. Dans cet enchaînement dans le temps concernant au moins deux étiquettes, la répétition d'une même étiquette est cependant envisageable, le visiteur pouvant décider, par exemple, d'atteindre plusieurs fois la même borne.

La pertinence des informations délivrées à l'utilisateur d'un même terminal est donc améliorée par l'invention, lors de sa visite du musée, entendu au sens de tout lieu ouvert au public. Il est notamment possible de n'afficher sur un écran de petite taille, possédant peu de lignes ou même une seule ligne, que les premières bornes non atteintes par l'utilisateur sans l'obliger à faire défiler la liste de toutes les bornes à visiter dans le musée. L'ergonomie du terminal est ainsi améliorée pour l'utilisateur.

Ce résultat est obtenu par la caractéristique principale de l'invention qui est d'actionner un terminal portable en fonction de la séquence temporelle des identifiants uniques d'étiquettes lues par ce terminal.

L'invention peut aussi être appliquée à la réalisation d'un système automatique de mise hors service de la sonnerie de téléphones portables à l'entrée d'un utilisateur dans une salle de cinéma et à la remise en service de la sonnerie ou signal sonore du téléphone à la sortie de la salle.
Dans ce mode, l'utilisateur peut utiliser son terminal portable pour lire une étiquette de salle à identifiant unique à son entrée et à sa sortie de la salle de cinéma. La base de données peut alors à chaque lecture d'un terminal identifié disposer d'un identifiant qu'elle utilise pour actionner le terminal portable en lui renvoyant une commande de basculement entre un mode sonore où il émet un signal sonore à chaque appel reçu et un mode vibreur ou silencieux. Pour la première lecture, associée à un terminal, la commande de l'invention est un passage en mode vibreur, pour la seconde lecture un passage en mode sonore. Il est possible d'envisager que la séquence temporelle soit de profondeur réduite à un seul identifiant, un basculement ne nécessitant que cette profondeur à la manière d'un va-et-vient.
L'invention peut donc être utilisée pour envoyer aussi bien des données que des commandes à un terminal portable, à piloter sa sonnerie ou autre fonctionnalité, son navigateur internet ou toute autre application et d'une manière générale à l'actionner au moyen de la lecture d'un ensemble d'étiquettes à identifiant unique.

Dans un autre exemple d'application, la répétition de la lecture d'une étiquette par un terminal identifié peut provoquer initialement le téléchargement d'une application puis son ouverture par le terminal pour les lectures suivantes.
Dans un autre exemple d'application, l'invention peut être utilisée, pour une étiquette disposée sur un bâtiment, pour paramétrer, par menu, un réseau de communication du terminal comme le réseau wifi.

Dans un autre exemple d'application, l'étiquette étant disposée sur un produit, la lecture par un même terminal peut permettre de choisir, par menu, entre le prix et les caractéristiques du produit, puis après achat l'affichage d'informations d'utilisation ou de service après-vente et après la fin de la garantie, un affichage supplémentaire de nouveaux produits similaires.
Dans un autre exemple d'application, l'étiquette étant disposée sur un produit, la lecture par un même terminal peut permettre de choisir, par menu, entre l'affichage d'information sur le produit à son entrée dans un entrepôt, puis à deuxième lecture, un affichage de formulaire adapté au départ du produit de l'entrepôt, puis à l'affichage d'informations adaptées au produit réceptionné par le client final.

Il est à noter qu'au sens de la présente invention, pour un terminal lisant séquentiellement des identifiants uniques d'un ensemble d'étiquettes, une répétition est une suite temporelle d'identifiants uniques d'une même étiquette et un enchaînement est une suite temporelle d'identifiants uniques d'au moins deux étiquettes, avec ou sans répétition dans le temps d'identifiants uniques d'une même étiquette, au sein de la suite. De ce point de vue, une séquence peut être aussi définie, comme une sous-suite d'une suite temporelle d'identifiants uniques d'un ensemble d'étiquettes lues par ledit terminal, sous-suite constituant un extrait de l'historique des identifiants des étiquettes lues par le terminal.
L'invention peut donc aussi être vue, de façon la plus générale, comme un exemple de moyen d'actionnement d'un terminal identifiable, en fonction de l'historique de ses lectures d'étiquettes à identifiant unique.

L'invention est susceptible d'application industrielle à la réalisation de terminaux portables ergonomiques et à la téléphonie mobile.

## Revendications

1. Système pour actionner un terminal portable par un utilisateur au moyen d'un ensemble d'étiquettes à identifiant unique, ledit système comprend un ensemble d'étiquettes à identifiant unique, ledit système comprend un terminal portable par un utilisateur, le terminal est apte à lire séquentiellement, sur l'ensemble d'étiquettes, des identifiants uniques et ledit système comprend une base de données hébergée sur un serveur distant dudit terminal, en liaison avec le terminal, apte à identifier le terminal et à actionner le terminal identifié, en fonction d'une séquence dans le temps des déplacements de l'utilisateur représentée par l'historique des étiquettes distinctes lues par un même terminal au cours du temps ou du nombre de fois qu'un même terminal a lu une même étiquette, ledit historique étant envoyé audit serveur distant et associé dans ledit serveur à un identifiant ou un numéro du terminal.

2. Système selon la revendication 1, dans lequel ledit ensemble d'étiquettes est un ensemble constitué d'une seule étiquette et dans lequel ladite séquence des identifiants uniques consiste en une répétition de l'identifiant unique de ladite seule étiquette.

3. Système selon la revendication 1, dans lequel ladite séquence des identifiants uniques consiste en un enchaînement des identifiants uniques d'au moins deux étiquettes.

4. Système selon l'une quelconque des revendications 1 à 3, dans lequel la base de données est apte à actionner le terminal identifié en envoyant des commandes audit terminal.

5. Système selon l'une quelconque des revendications 1 à 3, dans lequel la base de données est apte à actionner le terminal identifié en envoyant des données audit terminal.

6. Système selon la revendication 4, dans lequel lesdites commandes sont une commande d'inhibition ou d'autorisation d'un signal sonore du terminal.

7. Système selon la revendication 5, dans lequel lesdites données sont envoyées à un navigateur internet du terminal.

8. Procédé pour la mise en oeuvre d'un système selon la revendication 1, comprenant les étapes de lire en séquence, sur l'ensemble d'étiquettes, des identifiants uniques, par le terminal, envoyer en séquence, à la base de données, les identifiants uniques lus, recevoir en séquence, dans la base de données, les identifiants uniques envoyés, identifier le terminal, dans la base de données et actionnement du terminal identifié, par la base de données, en fonction de la séquence des identifiants uniques reçus.

9. Application du procédé selon la revendication 8 à la réalisation d'un parcours personnalisé, pour un visiteur utilisant ledit terminal portable , dans un lieu de visite équipé de bornes munies d'étiquettes à identifiant unique dudit ensemble, le visiteur souhaitant atteindre une seule fois chaque borne dans un ordre quelconque, dans laquelle la base de donnée renvoie au terminal, à la lecture d'une étiquette d'une borne quelconque du lieu de visite, une liste des bornes dudit lieu, sans mentionner les bornes dont les étiquettes ont déjà été lues, en séquence, par le terminal utilisé par le visiteur.

## Patentansprüche

1. System zur Betätigung eines tragbaren Terminals durch einen Benutzer mittels einer Etikettengruppe mit einzigartiger Kennung, wobei das genannte System eine Etikettengruppe mit einzigartiger Kennung umfasst, wobei das genannte System ein durch einen Benutzer tragbares Terminal umfasst; das Terminal geeignet ist, um von allen Etiketten die einzigartigen Kennungen sequentiell zu lesen und das genannte System eine Datenbank umfasst, die auf einem von dem Terminal entfernten Server in Verbindung mit dem Terminal beherbergt wird, geeignet ist, das Terminal zu identifizieren und das identifizierte Terminal in Abhängigkeit einer Sequenz im Zeitverlauf der Versetzungen des Benutzers zu betätigten, die von der Historie der unterschiedlichen, von einem und demselben Terminal im Zeitverlauf gelesenen Etiketten oder der Anzahl der Male, in denen ein und dasselbe Terminal ein und dasselbe Etikett gelesen hat, dargestellt wird, wobei die genannte Historie an den entfernten Server gesandt wird und in dem genannten Server einer Kennung oder einer Nummer des Terminals zugeordnet wird.

2. System gemäß Anspruch 1, bei dem die genannte Etikettengruppe eine aus einer einem einzigen Etikett gebildete Gruppe ist und bei der die genannte Sequenz der einzigartigen Kennungen aus einer Wiederholung der einzigartigen Kennung des genannten einzigen Etiketts gebildet ist.

3. System gemäß Anspruch 1, bei dem die genannte Sequenz der einzigartigen Kennungen aus einer Kette der einzigartigen Kennungen von wenigstens zwei Etiketten gebildet ist.

4. System gemäß irgendeinem der Ansprüche 1 bis 3, bei dem die Datenbank geeignet ist, das identifizierte Terminal durch Versenden von Befehlen an das Terminal zu betätigen.

5. System gemäß irgendeinem der Ansprüche 1 bis 3, bei dem die Datenbank geeignet ist, das identifizierte Terminal durch Versenden der Daten an das genannte Terminal zu betätigen.

6. System gemäß Anspruch 4, bei dem die genannten Befehle ein Inhibitions- oder Zulassungsbefehl eines Tonsignals des Terminals sind.

7. System gemäß Anspruch 5, bei dem die genannten Daten an einen Internetnavigator des Terminals gesandt werden.

8. Verfahren für die Umsetzung eines Systems gemäß Anspruch 1, umfassend die Schritte des Lesens in der Sequenz von allen Etiketten der einzigartigen Kennungen durch das Terminal, Versenden in der Sequenz der gelesenen einzigartigen Kennungen an die Datenbank, Empfangen der versandten einzigartigen Kennungen in der Sequenz in der Datenbank, Identifizieren des Terminals in der Datenbank und Betätigen des durch die Datenbank identifizierten Terminals in Abhängigkeit von der Sequenz der empfangenen einzigartigen Kennungen.

9. Anwendung des Verfahrens gemäß Anspruch 8 auf die Realisierung eines personalisierten Parcours für einen das genannte tragbare Terminal verwendenden Benutzer an einem Besuchsort, der mit Stationen ausgerüstet ist, die mit Etiketten mit einzigartiger Kennung der genannten Gruppe versehen sind, wobei der Besucher jede Station in einer beliebigen Reihenfolge ein einziges Mal besuchen möchte, in der die Datenbank beim Lesen eines Etiketts einer beliebigen Station des Besuchsortes eine Liste der Stationen des genannten Ortes an das Terminal zurücksendet, ohne die Stationen zu erwähnen, deren Etiketten bereits in der Sequenz von dem vom Besucher verwendeten Terminal gelesen wurden.

## Claims

1. System for actuating a portable terminal by a user using a set of tags having a unique identifier, said system comprises a set of tags having a unique identifier, said system comprises a portable terminal by a user, the terminal is capable of sequentially reading, among the set of tags, unique identifiers and said system comprises a database hosted on a remote server of said terminal, in liaison with the terminal, capable of identifying the terminal and of actuating the identified terminal, according to a sequence over time of the displacements of the user represented by the history of distinct tags read by the same terminal over the course of time or of the number of times that the same terminal has read the same tag, said history being sent to said remote server and associated in said server with an identifier or a number of the terminal.

2. System according to claim 1, wherein said set of tags is a set comprised of a single tag and wherein said sequence of the unique identifiers consists of a repetition of the unique identifier of said single tag.

3. System according to claim 1, wherein said sequence of the unique identifiers consists of a sequence of unique identifiers of at least two tags.

4. System according to any of claims 1 to 3, wherein the database is able to actuate the identified terminal by sending commands to said terminal.

5. System according to any of claims 1 to 3, wherein the database is able to actuate the identified terminal by sending data to said terminal.

6. System according to claim 4, wherein said commands are a command for inhibiting or for authorising an audible signal of the terminal.

7. System according to claim 5, wherein said data is sent to an internet browser of the terminal.

8. Method for implementing a system according to claim 1, comprising the steps of reading in sequence, among the set of tags, unique identifiers, by the terminal, sending in sequence, to the database, the unique identifiers read, receiving in sequence, in the database, the unique identifiers sent, identifying the terminal, in the database and actuating the identified terminal, by the database, according to the sequence of the unique identifiers received.

9. Application of the method according to claim 8 in the production of a customised itinerary, for a visitor using said portable terminal, in a place to visit provided with terminals provided with tags having a unique identifier of said set, the visitor wishing to reach each terminal a single time in any order whatsoever, wherein the database sends back to the terminal, upon reading a tag of any terminal whatsoever of the place to visit, a list of terminals of said place, without mentioning the terminals of which the tags have already been read, in sequence, by the terminal used by the visitor.
